# EUROPEAN PATENT APPLICATION

(11) **EP 4 813 806 A1**
(43) Date of publication of application: **30.09.2026**
(21) Application number: 26167863.5
(22) Date of filing: 26.03.2026
(51) Int. Cl.: B62D 5/04, B62D 3/02

(54) **STEERING SYSTEM**

(30) Priority: 28.03.2025 LU 600849
(71) Applicant: Nabtesco Corporation, Tokyo 102-0093 (JP)
(72) Inventor: Thorn, Tobias, 56370 Dörsdorf (DE)
(74) Representative: Hoffmann, Jürgen

(57) **Abstract**

The invention relates to a steering system (1) comprising an electric motor (2) and a steering gear device(3), which comprises a first steering gear input shaft (4) that is couplable to a steering shaft, a second steering gear input shaft (5) that is drivably coupled to the electric motor (2), and a steering gear output shaft (6), wherein the torque path from the first steering gear input shaft (4) to the steering gear output shaft (6) comprises at least two drivably connected gear stages. The steering system is characterized in that one of the gear stages is configured as a crossed helical gear (19), which comprises a first helical gear (17) that is in meshing engagement with a second helical gear (18).

## Description

The invention relates to a steering system comprising an electric motor and a steering gear device, which comprises a first steering gear input shaft that is couplable to a steering shaft, a second steering gear input shaft that is drivably coupled to the electric motor, and a steering gear output shaft, wherein the torque path from the first steering gear input shaft to the steering gear output shaft comprises at least two drivably connected gear stages.

A power steering system is known from DE 20 2014 101 670 U1. The power steering system has a steering wheel shaft on which a first worm screw and a worm wheel are arranged coaxially. The power steering system further has an auxiliary force shaft on which a second worm screw meshing with the worm wheel is arranged coaxially. The power steering system additionally has a segment shaft with a gear segment which meshes with the first worm screw.

A steering gear for an electromechanical steering system for a vehicle is known from DE 10 2019 127 965 A1. The steering gear has an input shaft couplable or coupled to a steering column of the steering system, a segment shaft couplable or coupled to a pitman arm of the steering system, an angular gear, a servo gear, and an electric motor for driving the servo gear. The angular gear is configured as a bevel gear. The input shaft and the electric motor are connected to the servo gear. The servo gear is connected to the angular gear. The angular gear is connected to the segment shaft. The angular gear is configured to transmit torque from the servo gear to the segment shaft via two transmission paths.

A power steering system of a non-track-bound motor vehicle configured as a recirculating ball steering system is known from DE 102 34 596 B3. To increase the variability of the recirculating ball steering system, a servo motor configured as an electric motor is arranged at a steering gear input to reduce steering hand forces.

A commercial vehicle steering system is known from DE 102015217045 A1, which comprises a steering gear for transmitting a manual torque applied at a steering wheel to a pitman arm. The steering gear has an electric motor for providing an auxiliary torque for steering assistance, wherein the steering assistance is provided exclusively electrically over the entire operating range of the steering system. The steering gear further has an input shaft and an output shaft whose axes of rotation are skewed relative to one another. The steering gear further has a first gear device which couples the input shaft to the output shaft, and a second gear device to which the electric motor is connected on the input side. The second gear device is coupled on the output side to the output shaft, and a reduction gear stage of the gear device is arranged coaxially with the output shaft.

It is therefore the object of the present invention to provide a steering system of the type mentioned above, which comprises a compact design and at the same time has good adaptability to the installation situation in a commercial vehicle.

The object is solved by a steering system characterized in that one of the gear stages is configured as a crossed helical gear, which comprises a first helical gear that is in meshing engagement with a second helical gear.

It has been recognized in accordance with the invention that the reduction ratio from the first steering gear input shaft, which is connected to a steering handle of a commercial vehicle in a rotationally fixed manner and without further over- or under-ratio, to the steering gear output shaft is advantageously in the range of 1:22 to 1:26, preferably 1:24, so that the ratio between the steering angle at the steering wheel and the steering movement at the wheel corresponds to what drivers are accustomed to. At the same time, with regard to the connection of the motor, it should be noted that, due to the very high torque required at the steering gear output shaft, for example 8,000 Nm, a very high reduction ratio, for example in the range of 1:900 to 1:1, 500, in particular 1:1,000, must be achieved in the torque path from the motor to the steering gear output shaft in order to avoid the use of an excessively large motor. In this respect, the gear stage that comprises the steering gear output shaft or is directly coupled to the steering gear output shaft must advantageously have as large a reduction ratio as possible. Since the gear stage that comprises the steering gear output shaft or is directly coupled to the steering gear output shaft is also located in the torque path from the first steering gear input shaft to the steering gear output shaft, special boundary conditions arise for the reduction ratio of the gear stage that (alone or with at least one further gear stage) is drivably upstream in this torque path of the gear stage that comprises the steering gear output shaft or is directly coupled to the steering gear output shaft. It has been shown that the required reduction ratio of this gear stage can be achieved with a very compact design and, at the same time, with an arrangement of the first steering gear input shaft relative to the steering gear output shaft that is advantageous in terms of the installation situation and the utilization of installation space in a commercial vehicle, by configuring the gear stage as a crossed helical gear.

A crossed helical gear is to be understood as a gear having two helically toothed gears which are in direct meshing engagement with one another and whose axes of rotation are skewed relative to one another. In particular, the axis of rotation of one of the gears may lie in a plane whose surface normal vector is parallel to the axis of rotation of the other gear. It may advantageously be provided that the following applies to both helically toothed gears: L < D π sin β, wherein L is the axial length of the gear, D is the root circle diameter of the helical toothing, π is the mathematical constant pi, and β is the helix angle.

In an advantageous embodiment, the axis of rotation of the first helical gear lies in a plane that has an angle of between 70 and 110 degrees, in particular 90 degrees, relative to the axis of rotation of the second helical gear. This embodiment contributes in a particularly advantageous manner to positioning the first steering gear input shaft and the steering gear output shaft in an optimal alignment with respect to each other in order to achieve a particularly good adaptation to the installation situation and efficient use of the installation space in a commercial vehicle.

As already mentioned, the other gear stage can be advantageously coupled directly to the steering gear output shaft or can comprise the steering gear output shaft.

In a particularly advantageous embodiment, the steering system comprises a further gear stage which is drivably connected downstream of the gear stage configured as a crossed helical gear. The further gear stage can advantageously comprise a step-up ratio in the fast range, preferably in the range from 3:1 to 10:1, while the crossed helical gear comprises a reduction ratio in the range of 1:1.5 to 1:5, in order to achieve the above-mentioned reduction ratio of 1:22 to 1:26, preferably 1:24.

Preferably, the other of the gear stages is connected drivably downstream of the further gear stage.

In a particularly compact and robust embodiment, one of the helical gears of the crossed helical gear serves as an intermediate gear, which is part of the gear stage and also part of the further gear stage. For this purpose, the intermediate gear may comprise an additional toothing in addition to its helical toothing.

A particularly advantageous embodiment is one in which the intermediate gear is configured as a ring gear that comprises internal toothing as additional toothing. The internal toothing can be configured as straight toothing or helical toothing. With such an embodiment, the above-mentioned advantageous transmission ratios can be achieved particularly well with a very compact design. In such an embodiment, the further gear stage can advantageously comprise a step-up ratio in the range of 5:1 to 10:1, in particular 7.2:1, while the crossed helical gear comprises a reduction ratio in the range of 1:2.5 to 1:5, in particular 1:3.7, to comprise the above-mentioned reduction ratio of 1:22 to 1:26, preferably 1:24, in a compact and space-saving manner in the torque path from the first steering gear input shaft to the steering gear output shaft.

As an alternative to internal gearing, the intermediate gear, in particular in addition to external gearing that is part of another gear stage, may comprise external toothing that is in meshing engagement with the toothing of the eccentric shaft gears. In such an embodiment, the further gear stage can advantageously comprise a step-up ratio in the range of 3:1 to 7:1, in particular 4.9:1, while the crossed helical gear comprises a reduction ratio in the range of 1:1.5 to 1:4.5, in particular 1:2.6, in order to comprise the above-mentioned reduction ratio of 1:22 to 1:26, preferably 1:24, in a compact and space-saving manner in the torque path from the first steering gear input shaft to the steering gear output shaft.

The intermediate gear can advantageously comprise the helical toothing on its outer circumference. Such an embodiment makes it possible for the intermediate gear to fulfill its dual function very easily. In addition, this embodiment can be made particularly compact.

In a particularly advantageous embodiment, the other of the gear stages is formed by a cycloidal gear, which comprises at least one externally toothed cycloidal disc that is in engagement with roller pins arranged along a circumferential circle, wherein movement of the cycloidal disc is generated by a plurality of eccentric shafts driven in rotation, which are arranged eccentrically and are each rotatably supported about their own axis.

The cycloidal gear may advantageously have a reduction ratio in the range of 1:30 to 1:80, in particular in the range of 1:30 to 1:50, very particularly of 1:40.

In particular, it may be advantageous to provide that each eccentric shaft comprises an eccentric shaft gear, which is a component of the further gear stage. In addition, each eccentric shaft gear may comprise a toothing, in particular an external toothing, which is in meshing engagement with the further toothing of the intermediate gear. In this way, the further gear stage forms a preceding stage directly upstream of the cycloidal gear, wherein the eccentric shaft gears and the intermediate gear are components of this preceding stage.

In a particularly advantageous embodiment, each eccentric shaft comprises a further eccentric shaft gear. The further eccentric shaft gears can advantageously be components of a second preceding stage of the cycloidal gear. In particular, it can be advantageously provided that the second preceding stage and the cycloidal gear together form an RV gear.

An RV gear is a gearbox that includes a cycloidal gear and a preceding stage. The cycloidal gear includes at least one cycloidal disc with cycloidal external toothing that engages with roller pins arranged along a circumferential circle. The movement of the cycloidal disc is generated by several eccentric shafts, which are arranged eccentrically and are each mounted so that they can rotate about themselves. Each eccentric shaft carries a gear wheel with an external toothing, which is in meshing engagement with a centrally arranged drive gear. The gear wheels of the eccentric shafts and the drive gear are components of the preceding stage. The drive gear transmits its rotary motion to the gears of the eccentric shafts, causing the eccentric shafts to drive the cycloidal disc in a wobbling motion in which the cycloidal disc rolls along the circumference of the roller pins.

In particular, the motor can be advantageously coupled directly or indirectly to the cycloidal gear via the second preceding stage. This preceding stage can advantageously have a reduction ratio in the range of 1:2.5 to 1:5.

In a particularly compact and robust embodiment, the eccentric shaft gear and the other eccentric shaft gear of each eccentric shaft are arranged on different sides of the at least one cycloidal disc. However, it is also possible for the eccentric shaft gear and the additional eccentric shaft gear of each eccentric shaft to be arranged on the same side of at least one cycloidal disc.

In a compact, robust, and reliable embodiment, each additional eccentric shaft gear is in meshing engagement with a centrally arranged and rotatably mounted drive gear. The drive gear and the additional eccentric shaft gears can form the second preceding stage immediately upstream of the cycloidal gear or at least be components of the second preceding stage.

The other gear stage can alternatively be formed by a strain wave gear. Such an embodiment is particularly advantageous due to the lack of backlash in the strain wave gear, which allows high reduction ratios of, for example, 1:240 to be achieved.

In an advantageous embodiment of the steering system, the electric motor is coupled to the second steering gear input by means of a transmission gear device. This allows the speed and torque of the motor to be adjusted to the requirements of the steering system.

A particularly advantageous embodiment is one in which the transmission gear device is configured as a traction mechanism gear or comprises one. A traction mechanism gear, for example in the form of a toothed belt or chain gear, enables low-noise and low-vibration power transmission. In addition, a traction mechanism gear can be used to position the electric motor relative to the steering gear device in a manner that is particularly advantageous for utilizing the installation space available in a vehicle.

Alternatively, the transmission gear device may be configured as a spur gear or may comprise such a gear. In order to achieve an advantageous transmission ratio with a compact design, the spur gear may advantageously comprise three spur gears.

Another advantageous embodiment provides that the transmission device is designed as a strain wave gear or comprises one. A strain wave gear also enables an extremely compact design and offers particularly high steering precision thanks to its backlash-free power transmission.

In particular, the steering system can be configured, for example by means of the special embodiments of the transmission gear device described above, in such a way that the motor is arranged offset, in particular axis-parallel offset, to the second gear stage and/or to the steering gear output shaft. This arrangement enables a space-saving design and allows flexible integration of the motor into the installation space of the vehicle.

Alternatively, the steering system can be configured such that the motor is arranged coaxially with the second gear stage. This embodiment ensures direct and low-loss power transmission, thereby increasing the efficiency of the system. It also results in a compact unit, particularly in radial terms, which facilitates easy installation and maintenance.

Preferably, the steering gear device comprises a steering gear device housing which encloses at least the cycloidal gear. In particular, it may be advantageous for the steering gear device housing to also enclose at least one of the other gear stages, in particular all gear stages, and/or other steering system components. For example, the steering gear device housing may advantageously also enclose the transmission gear device.

Preferably, the steering gear device housing comprises fastening elements for fastening the steering gear device housing to a higher-level structure, in particular a vehicle body. The fastening elements of the steering gear device housing can, for example, be configured as apertures or as threaded holes for fastening screws.

In a particularly advantageous embodiment, the steering gear device housing is configured in such a way that, with this housing, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured. Such a steering system offers the possibility of easily implementing a mirror-symmetrical steering system using identical parts, which simplifies adaptation to different vehicle variants, in particular for left-hand and right-hand drive vehicles, without the need for costly redesigns. This leads to more efficient production and reduces both development and manufacturing costs.

In general, the steering system components can be advantageously configured in such a way that with this steering system components, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured. A particular advantage of this embodiment is the possibility of using identical parts. Since all steering system components are designed so that they can be used in a mirror-symmetrical manner, there is no need for different components for left-hand and right-hand drive vehicles. This leads to a reduction in the number of variants, which significantly lowers both production and logistics costs. The use of identical parts also allows economies of scale to be exploited in production, which reduces manufacturing costs. Assembly is also simplified, as the same assembly can be used regardless of the installation direction. At the same time, serviceability is improved, as fewer different components need to be kept in stock for spare parts supply.

Alternatively, in an embodiment which includes worms, spindles and/or helically toothed gears, for example as components of a gear stage configured as a worm gear, a spindle gear or a crossed helical gear, the steering system components may be configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft and the fastening elements, can be manufactured when all worms, spindles and helically toothed gears are replaced by identical ones having an opposite helix direction. Such an embodiment likewise largely provides the advantage of using identical parts.

A particularly advantageous embodiment provides that the steering gear device housing, in particular in an opening in its housing wall, has at least one input shaft bearing receptacle for a steering gear input shaft bearing. A steering gear input shaft bearing can be arranged in the input shaft bearing receptacle for the rotatable mounting of the steering gear input shaft. This enables stable mounting of the steering gear input shaft. The steering gear input shaft bearing can advantageously be configured as a rolling bearing, in particular as a ball bearing or as a roller bearing or as an angular contact roller bearing.

A particularly advantageous embodiment is one in which the steering gear device housing has, in addition to the input shaft bearing receptacle, a further input shaft bearing receptacle which is arranged symmetrically with respect to a horizontal mirror plane in relation to the first input shaft bearing receptacle. A steering gear input shaft bearing for supporting the steering gear input shaft can be arranged in the input shaft bearing receptacle. This symmetrical design facilitates production and enables cost-effective implementation of left-hand and right-hand drive variants with regard to the rotational bearing of the steering gear input shaft.

In particular, it may be advantageous to provide that, depending on whether a steering system is to be manufactured for a right-hand drive vehicle or for a left-hand drive vehicle, the steering gear input shaft bearing is inserted either into the input shaft bearing receptacle or into the additional input shaft bearing receptacle. Preferably, the additional input shaft bearing receptacle is closed with a cover when the steering gear input shaft bearing is inserted into the input shaft bearing receptacle. Conversely, the input shaft bearing receptacle is preferably closed with a cover when the steering gear input shaft bearing is inserted into the additional input shaft bearing receptacle. The cover is preferably configured in such a way that it can be removed without damage, for example for maintenance purposes.

Alternatively, it may be advantageous to provide a steering gear input shaft bearing in both the input shaft bearing receptacle and the additional input shaft bearing receptacle in order to securely support the first steering gear input shaft for rotation. Depending on whether a steering system for a right-hand drive vehicle or a steering system for a left-hand drive vehicle is to be manufactured, the steering gear input shaft then protrudes from the steering gear device housing either through the opening of the input shaft bearing receptacle or through the opening of the further input shaft bearing receptacle. The opening of the other input shaft bearing receptacle is preferably closed with a cover.

The steering gear device housing may advantageously comprise an output shaft bearing receptacle for a steering gear output shaft bearing, thereby enabling precise rotational support of the steering gear output shaft. A steering gear output shaft bearing may be arranged in the output shaft bearing receptacle.

A particularly advantageous embodiment is one in which the steering gear device housing has, in addition to the output shaft bearing receptacle, a further output shaft bearing receptacle which is arranged symmetrically with respect to a mirror plane in relation to the first output shaft bearing receptacle. A steering gear output shaft bearing for supporting the steering gear output shaft can be arranged in the output shaft bearing receptacle. This symmetrical design facilitates production and enables cost-effective implementation of left-hand and right-hand drive variants with regard to the rotational bearing of the steering gear output shaft.

In particular, it may be advantageous to provide that, depending on whether a steering system for a right-hand drive vehicle or a steering system for a left-hand drive vehicle is to be manufactured, the steering gear output shaft bearing is inserted either into the output shaft bearing receptacle or into the additional output shaft bearing receptacle. Preferably, the additional output shaft bearing receptacle is closed with a cover when the steering gear output shaft bearing is inserted into the output shaft bearing receptacle. Conversely, the output shaft bearing receptacle is preferably closed with a cover when the steering gear output shaft bearing is inserted into the additional output shaft bearing receptacle. The cover is preferably configured in such a way that it can be removed without damage, for example for maintenance purposes.

A method for manufacturing a plurality of steering systems is particularly advantageous, in which steering system components are first provided. These include, in particular, a plurality of identical electric motors, a plurality of steering gear devices, and a plurality of steering gear device housings. The steering gear devices each include a first steering gear input shaft that is couplable with a steering shaft, a second steering gear input shaft that is or is couplable with the electric motor for drivable coupling, and a steering gear output shaft. The steering gear device housings each have fastening elements for fastening the steering gear device housing to a higher-level structure, in particular a vehicle body, wherein the steering gear device housings are configured in such a way that a mirror-symmetrical steering system can be produced with them, at least with regard to the arrangement and alignment of the first and second steering gear input shafts, the steering gear output shaft, and the fastening elements. mirror plane, at least with regard to the arrangement and alignment of the first and second steering gear input shafts, the steering gear output shaft, and the fastening elements. Preferably, the steering gear device housings are configured in such a way that they can be used to produce steering systems for both right-hand drive vehicles and left-hand drive vehicles.

A particularly advantageous embodiment is one in which the steering systems for left-hand drive and right-hand drive vehicles are assembled entirely from the same steering system components. This leads to a significant reduction in the variety of parts and thus to cost savings in production and logistics. Standardizing the components also simplifies warehousing and reduces the complexity of assembly.

In another advantageous embodiment, the steering systems for left-hand drive and right-hand drive vehicles can also consist of the same components, with the exception that worms, spindles, or helical gears with opposite helix directions are used.

As mentioned above, it may be advantageous to provide, depending on whether a steering system is to be manufactured for a right-hand drive vehicle or for a left-hand drive vehicle, a steering gear input shaft bearing for rotary mounting of the steering gear input shaft is inserted either into an input shaft bearing receptacle or into a further input shaft bearing receptacle arranged mirror-symmetrically with respect to the input shaft bearing receptacle.

As already mentioned above, it may be advantageous to provide, depending on whether a steering system is to be manufactured for a right-hand drive vehicle or for a left-hand drive vehicle, a steering gear output shaft bearing for rotary mounting of the steering gear output shaft is inserted either into an output shaft bearing receptacle or into a further output shaft bearing receptacle which is arranged mirror-symmetrically with respect to the output shaft bearing receptacle.

A particularly advantageous embodiment is one in which the distance of a plane perpendicular to the steering gear output shaft, in which the axis of rotation of the first steering gear input shaft is located, from the plane in which the portion of the outer side of the steering gear device housing directly surrounding the output shaft bearing receptacle is located, lies in the range from 70 mm to 90 mm or in particular amounts to 80 mm. These dimensions enable a good balance between compactness, structural stability and utilization of the available installation space.

The steering system may advantageously be configured such that the axes of rotation of the first steering gear input shaft and the steering gear output shaft are skewed relative to one another. This arrangement allows particularly efficient utilization of the installation space and integration into a vehicle. In particular, the axes of rotation of the first steering gear input shaft and the steering gear output shaft may additionally be arranged in planes perpendicular to one another, which enables particularly efficient utilization of the installation space and integration into a vehicle. A particularly advantageous embodiment is one in which the axes of rotation of the first steering gear input shaft and the steering gear output shaft have a spacing of 80 mm to 100 mm, in particular 90 mm.

A particularly advantageous steering arrangement comprises a steering system according to the invention and a steering shaft which is operatively connected to a steering handle, wherein the steering shaft is, preferably directly, coupled to the first steering gear input shaft or is manufactured integrally therewith.

A particularly advantageous vehicle, in particular a commercial vehicle, very particularly a truck or a bus, comprises a steering system according to the invention or a steering arrangement according to the invention.

In the drawing, the subject matter of the invention is illustrated by way of example and schematically and is described below with reference to the figures, wherein identical or functionally identical elements are usually provided with the same reference signs even in different embodiments.

The figures show:
- Fig. 1: an embodiment of a steering system according to the invention in a sectional view,
- Fig. 2: the embodiment of a steering system according to the invention in a further sectional view,
- Fig. 3: the embodiment of a steering system according to the invention in a side view,
- Fig. 4: shows an example of a steering system according to the invention in a perspective view,
- Fig. 5: shows an example of a steering system according to the invention in a perspective view from the front and, in a further perspective view from the front, a steering system that is mirror-symmetrical to the steering system with respect to a mirror plane, in particular a vertical mirror plane,
- Fig. 6: shows a perspective view from the rear of the embodiment of a steering system according to the invention and, in a further perspective view from the rear, a steering system that is mirror-symmetrical to the steering system with respect to a mirror plane, in particular a vertical mirror plane,
- Fig. 7: shows a side view of the embodiment of a steering system according to the invention and, in a further side view from behind, a steering system that is mirror-symmetrical to the steering system with respect to a mirror plane, in particular a vertical mirror plane.
- Fig. 8: a schematic detailed view of the crossed helical gear and the RV gear of the embodiment of a steering system according to the invention, and
- Fig. 9: a schematic detailed view of an embodiment of a combination of a crossed helical gear and an RV gear for a steering system according to the invention.

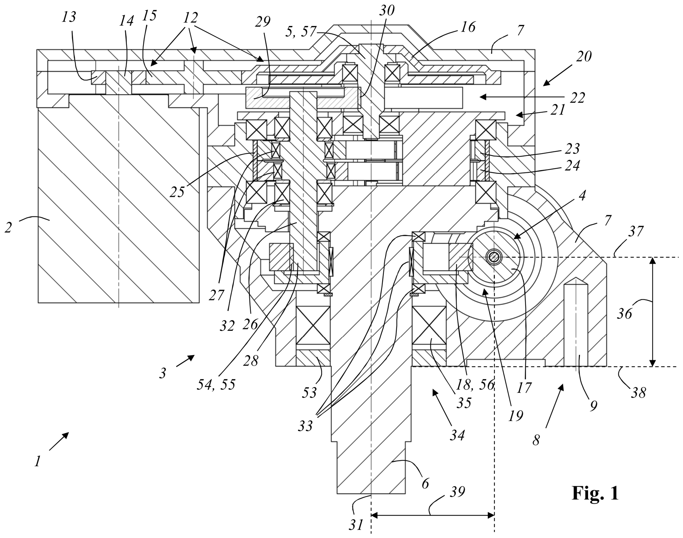

Fig. 1 shows a first embodiment of a steering system 1 according to the invention in a sectional view.

The steering system 1 consists of steering system components including at least an electric motor 2 and a steering gear device 3 having a first steering gear input shaft 4 couplable to a (not shown) steering shaft and a second steering gear input shaft 5 drivably coupled to the electric motor 2, and having a steering gear output shaft 6. The steering system components further include a steering gear device housing 7 which has a plurality of fastening elements 8 for fastening the steering gear device housing 7 to a higher-level structure, in particular a vehicle body. The fastening elements 8 of the steering gear device housing 7 may, for example, be configured as through-openings or as threaded bores 9 for fastening screws.

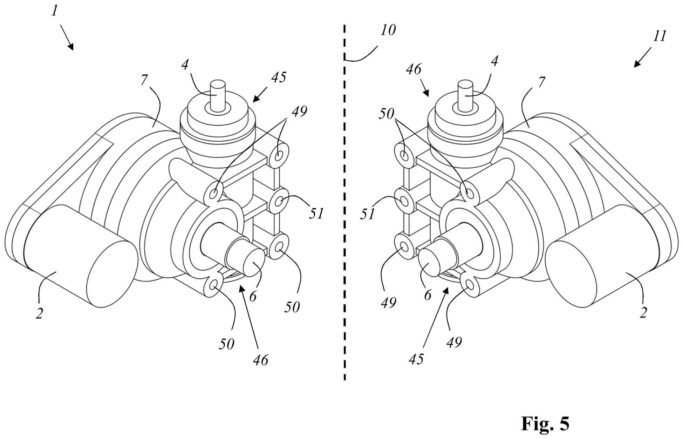

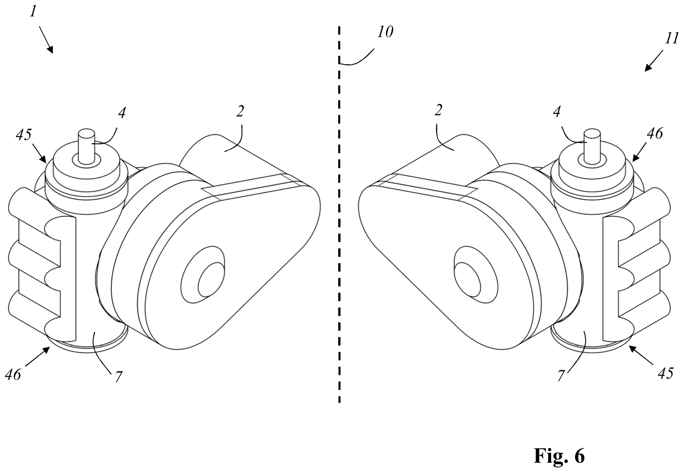

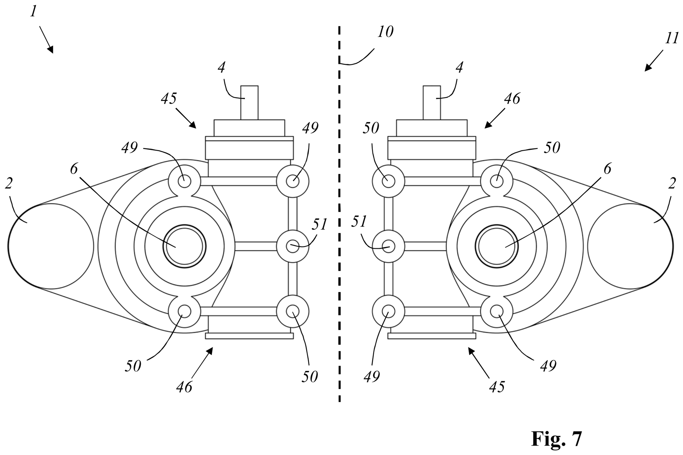

The steering gear device housing 7 is configured such that, with this housing, a steering system 11 that is mirror-symmetrical to the steering system 1 with respect to a mirror plane 10, in particular a vertical mirror plane, at least with regard to the arrangement and orientation of the first steering gear input shaft 4 and the second steering gear input shaft 5, the steering gear output shaft 6 and the fastening elements 8, can be manufactured, which is illustrated in Figs. 5 to 7 and explained in greater detail below. Specifically, in this embodiment the steering system components are configured such that, with these components, a steering system 11 that is mirror-symmetrical to the steering system 1 with respect to the mirror plane 10 with regard to the arrangement and orientation of the first steering gear input shaft 4 and the second steering gear input shaft 5, the steering gear output shaft 6 and the fastening elements 8, can be manufactured when the helically toothed gears 17, 18 of a crossed helical gear 19 enclosed in the steering gear device housing 7 are replaced by identical ones having an opposite helix direction.

The motor 2 is coupled to the second steering gear input shaft 5 by means of a transmission gear device 12. The transmission gear device 12 is configured as a spur gear and comprises a first spur gear 13 which is directly non-rotatably connected to an output shaft 14 of the motor 2. The transmission gear device 12 further comprises a rotatably mounted second spur gear 15 whose toothing is in meshing engagement with the toothing of the first spur gear 13. The transmission gear device 12 further comprises a third spur gear 16 which is directly non-rotatably connected to the second steering gear input shaft 5.

The torque path from the first steering gear input shaft 4 to the steering gear output shaft 6 comprises several drivably connected gear stages. One gear stage is configured as a crossed helical gear 19, while another gear stage, which is drivably connected downstream, is configured as an RV gear 20.

The RV gear 20 comprises a cycloidal gear 21 and a preceding stage 22. The cycloidal gear 21 is drivably connected downstream of the motor 2 via the transmission gear device 12 and the preceding stage 22. The cycloidal gear 21 includes two cycloidal discs 23, 24, each having a cycloidal external toothing which is in engagement with roller pins 25 arranged along a circumferential circle. The movement of the cycloidal discs 23, 24 is generated by a plurality of eccentric shafts 26 which are each arranged eccentrically and are each rotatably mounted about their own axis relative to the cycloidal discs 23, 24 by means of a rolling bearing 27.

Each eccentric shaft 26 has an eccentric shaft gear 28 and a further eccentric shaft gear 29. The eccentric shaft gear 28 and the further eccentric shaft gear 29 of each eccentric shaft 26 are arranged on opposite sides of the two cycloidal discs 23, 24.

The further eccentric shaft gears 29 are components of the preceding stage 22. The centrally arranged second steering gear input shaft 5 has an external toothing 30 which is in meshing engagement with the external toothings of the further eccentric shaft gears 29. The second steering gear input shaft 5 thus functions as the drive gear 57 of the preceding stage 22 and transmits its rotary motion to the further eccentric shaft gears 29, whereby the eccentric shafts 26 drive the cycloidal discs 23, 24 into a wobbling motion in which the cycloidal discs 23, 24 roll circumferentially along the circumferential circle of the roller pins 25. In this process, the eccentric shafts 26 rotate not only about their own axes but, together with the cycloidal discs 23, 24, also about the central axis of rotation 31 of the RV gear 20. Each of the eccentric shafts 26 is coupled to the steering gear output shaft 6 via a respective further rolling bearing 32, so that the rotational movement of the cycloidal discs 23, 24 about the central axis of rotation 31 is transmitted via the eccentric shafts 26 to the steering gear output shaft 6.

In addition, each of the eccentric shafts 26 is drivably coupled to the first steering gear input shaft 4 via a second gear stage and via the crossed helical gear 19 (third gear stage). The crossed helical gear 19 comprises a first helical gear 17, which is arranged coaxially with the steering gear input shaft 4 and is indirectly connected to it in a rotationally fixed manner. The crossed helical gear 19 comprises a second helical gear 18, whose helical external toothing meshes with the helical external toothing of the first helical gear 17 in a meshing engagement. The axes of rotation of the helical gears 17, 18 are arranged at an angle to each other, with the second helical gear 18 rotating about the central axis of rotation 31 of the cycloidal gear 20.

The second helical gear 18 is ring-shaped and comprises helical external toothing on its outer circumference, which is in meshing engagement with the helical external toothing of the first helical gear 17. Along its inner circumference, the second helical gear 18 comprises internal toothing 54, which is in meshing engagement with the external toothing 55 of the other eccentric shaft gears 29. The internal toothing 54 and the external toothing 55 of the other eccentric shaft gears 29 form the second gear stage, which is drivably connected between the first gear stage and the second gear stage. The second helical gear 18 is mounted so as to be rotatable relative to the steering gear output shaft 6 by means of a plurality of rolling bearings 33.

In this respect, the torque path from the first steering gear input shaft 4 to the steering gear output shaft 6 comprises three drivably connected gear stages. The third of these gear stages is formed by the crossed helical gear 19. The second of these gear stages is formed by the meshing engagement of the, preferably straight, internal toothing 54 of the second helical gear 18 with the external toothing 55 of the eccentric shaft gears 28. A first of these gear stages is formed by the cycloidal gear 21. The helical gear 18 forms an intermediate gear 56, which is a component of two of the gear stages connected in series drivably. With its helical external toothing, it is a component of the crossed helical gear 19 and thus of the third gear stage. With its internal toothing 54, it is also a component of the second gear stage.

The steering gear device housing 7 comprises an output shaft bearing receptacle 34 in which a steering gear output shaft bearing 35 for rotatably supporting the steering gear output shaft 6 and a seal 53 are arranged.

The distance 36 between a plane 37 perpendicular to the steering gear output shaft 6, in which the axis of rotation of the first steering gear input shaft 4 is arranged, to the plane 38 in which the part of the outside of the steering gear device housing 7 that directly surrounds the output shaft bearing receptacle 34 is arranged is in the range of 70 mm to 90 mm and amounts to preferably 80 mm.

The axes of rotation of the first steering gear input shaft 4 and the steering gear output shaft 6 are arranged in mutually perpendicular planes, which comprise a distance 39 of 80 mm to 100 mm, in particular 90 mm.

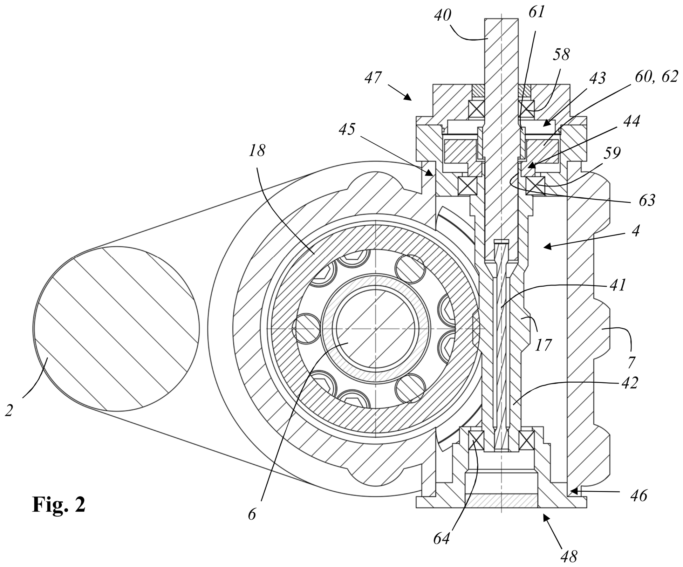

Figure 2 shows the embodiment of a steering system 1 according to the invention in a further sectional view.

As can be seen in Figure 2, the steering gear input shaft 4 comprises an input section 40 configured as a solid shaft, a middle section 41 configured as a solid shaft, and a hollow shaft section 42, which forms the first helical-toothed gear 17 in one section.

The middle section 41 is connected at one end directly in a rotationally fixed manner to the input section 40 and at the other end directly in a rotationally fixed manner to the hollow shaft section 42, wherein the hollow shaft section 42 surrounds the middle section 41 and a part of the input section 40.

The steering system 1 comprises a first rotary angle sensor 43 that detects the rotational position and rotational speed of the input section 40 of the first steering gear input shaft 4 and the steering speed. The steering system 1 comprises a second rotary angle sensor 44 that detects the rotational position of the part of the hollow shaft section 42 of the first steering gear input shaft 4 surrounding the input section 40.

The first rotary angle sensor 43 comprises a first rotary angle sensor element 60 and a first coding element 61, for example in the form of a line disc, a toothed ring, or a magnetic wheel, which interacts with the first rotary angle sensor element 60 in a contactless manner. The second rotary angle sensor 44 has a second rotary angle sensor element 62 and a second coding element 63 that interacts with the second rotary angle sensor element 62 in a contactless manner, for example in the form of a line disc, a toothed ring or a magnetic wheel, wherein the first rotary angle sensor element 60 and the second rotary angle sensor element 62 can advantageously be arranged together on the same carrier and/or in the same sensor housing. In the figure, the first rotary angle sensor element 60 and the second rotary angle sensor element 62 are illustrated together only schematically as a hatched closed polygon.

The measurement signals from the first rotary angle sensor element 60 and the second rotary angle sensor element 62 are transmitted to a control device (not shown) which controls the motor 2 taking into account the measurement signals. In this case, the control device can deduce the current torque exerted on the first steering gear input shaft 4 by means of a steering handle (not shown) from the respective difference between the rotational angle of the first rotary angle sensor element 60 and the rotational angle of the second rotary angle sensor element 62. This is possible because the input section 40, on which the first coding element 61 is arranged, and the end of the hollow shaft section 42, which is directly connected to the middle section 41 and on which the second coding element 63 is arranged, both belong to the first steering gear input shaft 4, but are located drivably in front of and behind the first helical gear 17 of the crossed helical gear 19. They therefore rotate relative to each other when torque is applied due to torsion, in particular of the comparatively thinly configured middle section 41, whereby the higher the torque exerted on the first steering gear input shaft 4 by means of a steering handle (not shown), the greater the rotational angle difference.

In this respect, it may be advantageous to provide that the control device controls the motor 2 at least as a function of the rotational angle difference between the first rotary angle sensor element 60 and the second rotary angle sensor element 62.

The steering gear device housing 7 comprises an input shaft bearing receptacle 45 and a further input shaft bearing receptacle 46, which is mirror-symmetrical with respect to a horizontal mirror plane in relation to the first input shaft bearing receptacle. A steering gear input shaft bearing module 47 is arranged in the input shaft bearing receptacle 45, which comprises a first rolling bearing 58 and a second rolling bearing 59. The input section 40 is rotatably supported by means of the first rolling bearing 58. The end of the hollow shaft section 42 surrounding the input section 40 is rotatably supported by means of the second rolling bearing 59.

A further steering gear input shaft bearing module 48, which comprises a rolling bearing 64, is arranged in the further input shaft bearing receptacle 46. The end of the hollow shaft section 42 directly connected to the middle section 41 is rotatably supported by means of the rolling bearing 64.

The steering gear input shaft bearing module 47 and the additional steering gear input shaft bearing module 48 serve in particular to securely support the first steering gear input shaft 4 to rotate, wherein the first rotary angle sensor element 60 and the second rotary angle sensor element 62 are spatially integrated into the steering gear input shaft bearing module 47. The steering gear input shaft 4 protrudes outwards through the opening of the input shaft bearing receptacle 45.

If, on the other hand, instead of the steering system 1, which may be configured for a left-hand drive vehicle, for example, a mirror-symmetrical steering system 11 for a right-hand drive vehicle is to be manufactured, the steering gear device housing 7 can be used in such a way that the steering gear input shaft 4 protrudes outwards from the steering gear device housing 7 through the opening of the further input shaft bearing receptacle 46, as illustrated in Figures 5 to 7.

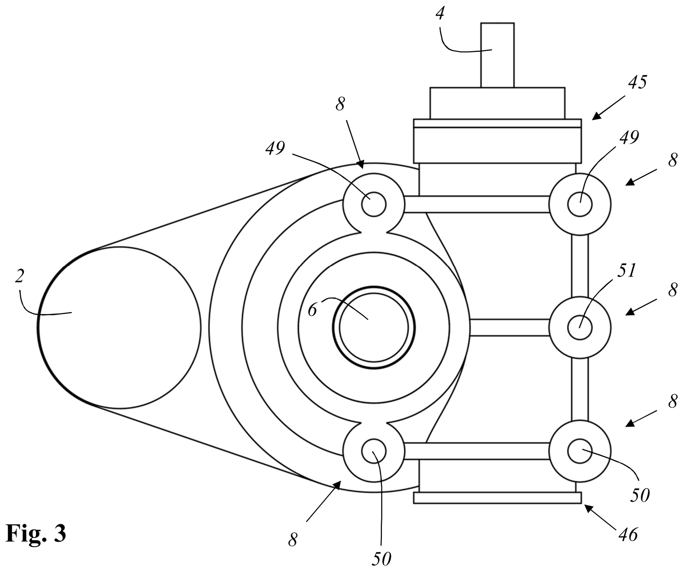

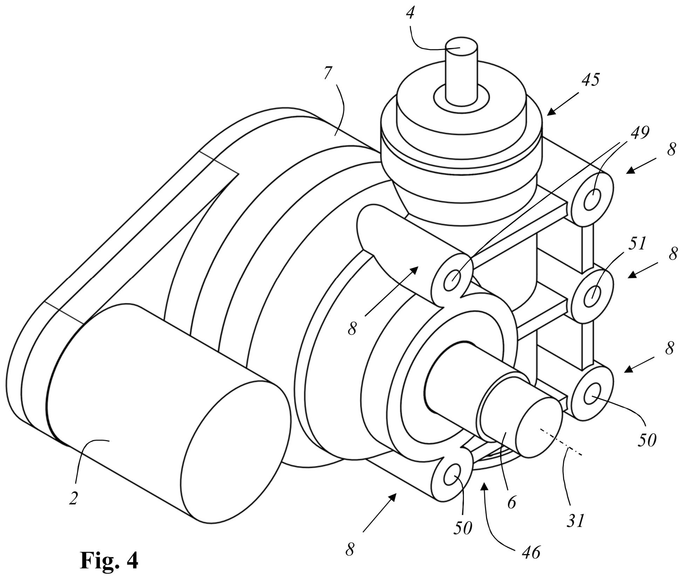

Figure 3 shows the steering system 1 in a side illustration, while Figure 4 shows the steering system 1 in a perspective illustration. In both figures, it can be seen that there are a total of five fastening elements 8, which may be configured as threaded holes.

There are two upper fastening elements 49, two lower fastening elements 50, and one middle fastening element 51. The fastening elements 8 are mirror-symmetrical with respect to a plane 52 in which the central axis of rotation 31 and the middle fastening element 51 are located.

As illustrated by Figs. 5 to 7, the steering gear device housing 7 is configured such that, with this housing, a steering system 11 that is mirror-symmetrical to the steering system 1 with respect to a mirror plane 10, in particular a vertical mirror plane, with regard to the arrangement and orientation of the first steering gear input shaft 4 and the second steering gear input shaft 5, the steering gear output shaft 6 and the fastening elements 8, can be manufactured. While, in the steering system 1, the two upper fastening elements 49 are arranged at the top, in the mirror-symmetrical steering system 11 the two upper fastening elements 49 are arranged at the bottom. While, in the steering system 1, the two lower fastening elements 50 are arranged at the bottom, in the mirror-symmetrical steering system 11 the two lower fastening elements 50 are arranged at the top.

While the steering gear input shaft 4, in the steering system 1, projects outward through the opening of the input shaft bearing receptacle 45, the steering gear input shaft 4, in the mirror-symmetrical steering system 11, projects outward through the opening of the further input shaft bearing receptacle 46.

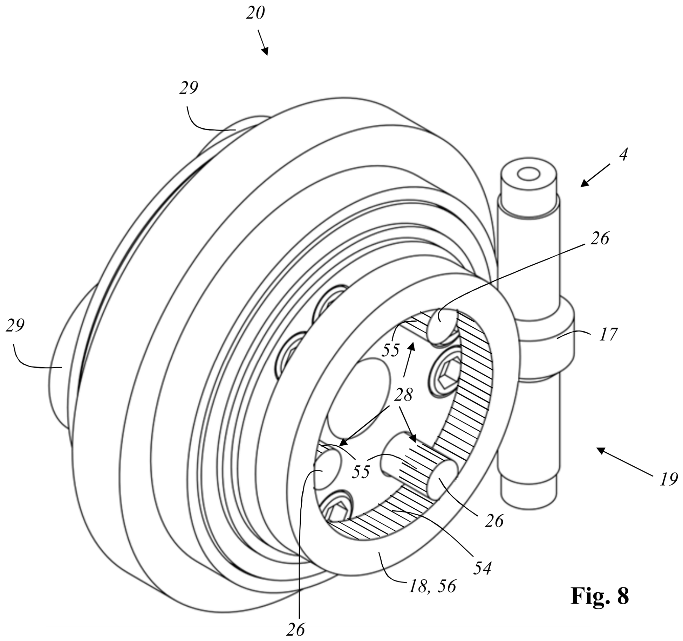

Fig. 8 shows a schematic detailed view of the crossed helical gear 19 and the RV gear 20 of the first embodiment of a steering system according to the invention, wherein the helical toothings of the first helically toothed gear 17 and the second helically toothed gear 18 are not illustrated for reasons of clarity.

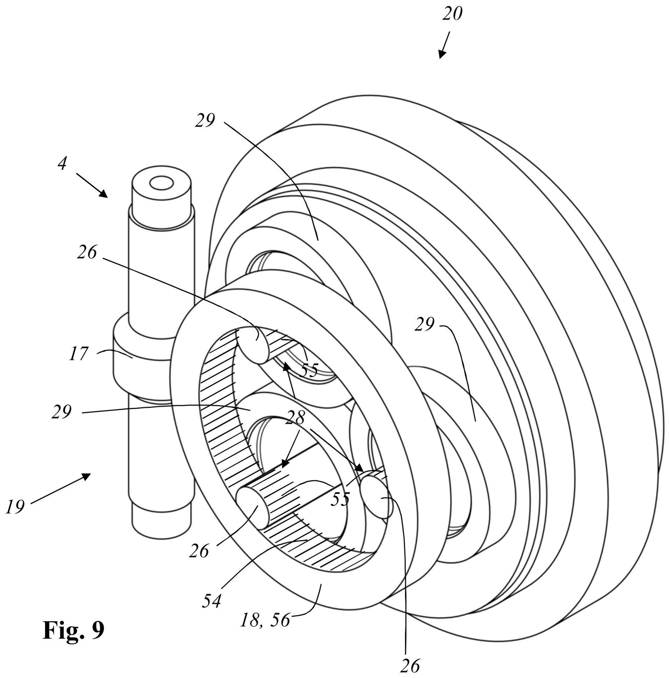

Figure 9 shows a schematic detailed view of an embodiment of a combination of a crossed helical gear 19 and an RV gear 20 for a steering system according to the invention.

In contrast to the combination of a crossed helical gear 19 and an RV gear 20 shown in Figure 8, the eccentric shaft gears 28 and the other eccentric shaft gears of each eccentric shaft are arranged on the same side of the two cycloidal discs 23, 24.

### List of reference signs:

- 1: steering system
- 2: motor
- 3: steering gear device
- 4: first steering gear input shaft
- 5: second steering gear input shaft
- 6: steering gear output shaft
- 7: steering gear device housing
- 8: fastening elements
- 9: threaded bore
- 10: mirror plane
- 11: mirror-symmetrical steering system
- 12: transmission gear device
- 13: first spur gear
- 14: output shaft
- 15: second spur gear
- 16: third spur gear
- 17: first helically toothed gear
- 18: second helically toothed gear
- 19: crossed helical gear
- 20: RV gear
- 21: cycloidal gear
- 22: preceding stage
- 23: cycloidal disc
- 24: cycloidal disc
- 25: roller pin
- 26: eccentric shafts
- 27: rolling bearing
- 28: eccentric shaft gear
- 29: further eccentric shaft gear
- 30: external toothing
- 31: central axis of rotation
- 32: further rolling bearing
- 33: rolling bearing
- 34: output shaft bearing receptacle
- 35: steering gear output shaft bearing
- 36: distance
- 37: plane
- 38: plane
- 39: distance
- 40: input section
- 41: middle section
- 42: hollow shaft section
- 43: first rotary angle sensor
- 44: second rotary angle sensor
- 45: input shaft bearing receptacle
- 46: further input shaft bearing receptacle
- 47: steering gear input shaft bearing module
- 48: further steering gear input shaft bearing module
- 49: upper fastening element
- 50: lower fastening element
- 51: central fastening element
- 52: plane
- 53: seal
- 54: internal toothing
- 55: external toothing
- 56: intermediate gear
- 57: drive gear
- 58: first rolling bearing
- 59: second rolling bearing
- 60: first rotary angle sensor
- 61: second rotary angle sensor
- 62: first coding element
- 63: second coding element
- 64: rolling bearing

## Claims

1. Steering system comprising
a. an electric motor and
b. a steering gear device, which
i. comprises a first steering gear input shaft that is couplable to a steering shaft and a second steering gear input shaft that is drivably coupled to the electric motor and a steering gear output shaft, wherein
ii. the torque path from the first steering gear input shaft to the steering gear output shaft comprises at least two drivably connected gear stages,
**characterized in that**
one of the gear stages is configured as a crossed helical gear, which comprises a first helically toothed gear wheel that is in meshing engagement with a second helically toothed gear wheel.

2. Steering system according to claim 1, **characterized in that**
a. the axis of rotation of the first helical gear lies in a plane which forms an angle in the range of 70 to 110 degrees, in particular 90 degrees, compared to the axis of rotation of the second helical gear, or **in that**
b. the other of the gear stages is directly coupled to the steering gear output shaft or comprises the steering gear output shaft.

3. Steering system according to claim 1 or 2, **characterized in that** the steering system has at least one of the following features a to f:
a. the steering system comprises a further gear stage which is drivably connected downstream of the gear stage configured as a crossed helical gear,
b. the steering system comprises a further gear stage which is drivably connected downstream of the gear stage, whereby the other of the gear stages is connected drivably downstream of the further gear stage,
c. the steering system comprises a further gear stage which is drivably connected downstream of the gear stage, whereby one of the helical gears of the crossed helical gear functions as an intermediate gear, which is a component of the gear stage and also a component of the further gear stage,
d. the steering system comprises a further gear stage which is drivably connected downstream of the gear stage, whereby one of the helical gears of the crossed helical gear functions as an intermediate gear, which is a component of the gear stage and also a component of the further gear stage and whereby the intermediate gear comprises a further gearing in addition to its helical gearing,
e. the steering system comprises a further gear stage which is drivably connected downstream of the gear stage, whereby one of the helical gears of the crossed helical gear functions as an intermediate gear, which is a component of the gear stage and also a component of the further gear stage and whereby the intermediate gear is configured as a ring gear which comprises a further gearing, in particular a straight internal gearing,
f. the steering system comprises a further gear stage which is drivably connected downstream of the gear stage, whereby one of the helical gears of the crossed helical gear functions as an intermediate gear, which is a component of the gear stage and also a component of the further gear stage and whereby the intermediate gear comprises the helical gearing on its outer circumference.

4. Steering system according to one of claims 1 to 3, **characterized in that** the steering system has at least one of the following features a to f:
a. the other of the gear stages is formed by a cycloidal gear that comprises at least one externally toothed cycloidal disc that is in engagement with roller pins arranged along a circumferential circle, wherein movement of the cycloidal disc is generated by a plurality of eccentric shafts driven for rotation, which are arranged eccentrically and are each rotatably supported about their own axis,
b. each eccentric shaft comprises an eccentric shaft gear which is a component of the further gear stage,
c. each eccentric shaft gear comprises a toothing, in particular an external toothing, which is in meshing engagement with the further toothing of the intermediate gear,
d. each eccentric shaft comprises a further eccentric shaft gear,
e. the eccentric shaft gear and the further eccentric shaft gear of each eccentric shaft are arranged on different sides of the at least one cycloidal disc,
f. each further eccentric shaft gear is in meshing engagement with a centrally arranged and rotatably supported drive gear.

5. Steering system according to one of claims 1 to 3, **characterized in that** the other of the gear stages is formed by a strain wave gear.

6. Steering system according to one of claims 1 to 5, **characterized in that** the steering system has at least one of the following features a to d:
a. the electric motor is coupled to the second steering gear input by means of a transmission gear device,
b. the electric motor is coupled to the second steering gear input by means of a transmission gear device which is configured as a traction mechanism gear or comprises a traction mechanism gear,
c. the electric motor is coupled to the second steering gear input by means of a transmission gear device which is configured as a spur gear or comprises a spur gear,
d. the electric motor is coupled to the second steering gear input by means of a transmission gear device which is configured as a strain wave gear or comprises a strain wave gear.

7. Steering system according to one of claims 1 to 6, **characterized in that**
a. the motor is arranged offset, in particular axis-parallel offset, to the steering gear output shaft and/or to the other gear stage, or **in that**
b. the motor is arranged coaxially with the steering gear output shaft and/or with the other gear stage.

8. Steering system according to one of claims 1 to 7, **characterized in that**
a. the steering gear device comprises a steering gear device housing which encloses at least the drivably connected gear stages, in particular all gear stages, and/or the transmission gear device, and/or **in that**
b. the steering gear device housing comprises fastening elements for fastening the steering gear device housing to a higher-level structure, in particular a vehicle body.

9. Steering system according to claim 8, **characterized in that**
a. the steering gear device housing is configured such that, with this housing, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured, and/or **in that**
b. the steering system components are configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured, and/or **in that**
c. the steering system components are configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured when all worms, spindles and helical toothed gears are replaced by identical ones having an opposite helix direction.

10. Steering system according to claim 8 or 9, **characterized in that**
a. the steering gear device housing, in particular in an opening in its housing wall, comprises at least one input shaft bearing receptacle for a steering gear input shaft bearing, or **in that**
b. the steering gear device housing, in particular in an opening in its housing wall, comprises at least one input shaft bearing receptacle for a steering gear input shaft bearing and, in particular in a further opening in its housing wall, comprises at least one further input shaft bearing receptacle for a steering gear input shaft bearing, which is configured and arranged to be mirror-symmetrical to the input shaft bearing receptacle with respect to a mirror plane, in particular with respect to a horizontal mirror plane.

11. Steering system according to one of claims 8 to 10, **characterized in that**
a. the steering gear device housing, in particular in an opening in its housing wall, comprises at least one output shaft bearing receptacle for a steering gear output shaft bearing, or **in that**
b. the distance between a plane perpendicular to the steering gear output shaft, in which the axis of rotation of the first steering gear input shaft is located, and the plane in which the part of the outside of the steering gear device housing that directly surrounds the output shaft bearing receptacle is located, is in the range of 70 mm to 90 mm, in particular 80 mm.

12. Steering system according to one of claims 7 to 11, **characterized in that**
a. the steering gear device housing, in particular in a further opening in its housing wall, comprises at least one further output shaft bearing receptacle for a steering gear output shaft bearing, which is configured and arranged to be mirror-symmetrical to the output shaft bearing receptacle with respect to a mirror plane, in particular with respect to a horizontal mirror plane, or **in that**
b. the steering gear device housing, in particular in a further opening in its housing wall, comprises at least one further output shaft bearing receptacle for a steering gear output shaft bearing, which is configured and arranged to be mirror-symmetrical to the output shaft bearing receptacle with respect to a mirror plane, in particular with respect to a horizontal mirror plane, whereby a steering gear output shaft bearing is arranged in the further output shaft bearing receptacle and whereby the distance between a plane perpendicular to the steering gear output shaft, in which the axis of rotation of the first steering gear input shaft is arranged, and the plane in which the part of the outside of the steering gear device housing that directly surrounds the further output shaft bearing receptacle is arranged, is in the range of 70 mm to 90 mm, in particular 80 mm.

13. Steering system according to one of claims 1 to 12, **characterized in that**
a. the axes of rotation of the first steering gear input shaft and the steering gear output shaft are skewed relative to each other or are arranged in planes perpendicular to each other, and/or that
b. the axes of rotation of the first steering gear input shaft and the steering gear output shaft are arranged in planes perpendicular to each other, and/or **in that**
c. the axes of rotation of the first steering gear input shaft and the steering gear output shaft comprise a distance between them in the range from 80 mm to 100 mm, in particular 90 mm.

14. Steering arrangement with a steering system according to one of claims 1 to 13 and with a steering shaft which is operatively connected to a steering handle and coupled to the first steering gear input shaft.

15. Vehicle, in particular commercial vehicle, especially truck or bus, which comprises a steering system according to one of claims 1 to 13 or a steering arrangement according to claim 14.
